# EUROPÄISCHE PATENTSCHRIFT

(11) **EP 2 429 748 B1**
(45) Veröffentlichungstag und Bekanntmachung des Hinweises auf die Patenterteilung: **17.04.2013**
(21) Anmeldenummer: 10722596.3
(22) Anmeldetag: 11.05.2010
(51) Int. Cl.: B23Q 1/00, B23B 31/40, B23B 31/16, B23B 31/22, B23B 31/107

(54) **VORRICHTUNG ZUM FESTSPANNEN EINES WERKSTÜCKTRÄGERS AN EINEM SPANNFUTTER**
DEVICE FOR CLAMPING A WORKPIECE HOLDER ON A COLLET CHUCK THAT CAN BE FIXED TO A MACHINE TOOL
DISPOSITIF DE SERRAGE D'UN PORTE-PIÈCE SUR UN MANDRIN POUVANT ÊTRE FIXÉ SUR UNE MACHINE D'USINAGE

(30) Priorität: 12.05.2009 CH 7412009
(43) Veröffentlichungstag der Anmeldung: 21.03.2012
(73) Patentinhaber: Kramer, W. Dietmar, 8331 Auslikon (CH)
(72) Erfinder: Kramer, W. Dietmar, 8331 Auslikon (CH)
(74) Vertreter: Luchs, Willi
(86) Internationale Anmeldenummer: PCT/EP2010/002885
(87) Internationale Veröffentlichungsnummer: WO 2010/130408

(56) Entgegenhaltungen:
- EP-A1- 1 068 918
- DE-A1- 3 744 092
- GB-A- 593 864

## Beschreibung

Die Erfindung betrifft eine Vorrichtung zum Festspannen eines Werkstückträgers an einem an einer Bearbeitungsmaschine fixierbaren Spannfutter gemäss dem Oberbegriff des Anspruches 1.

Aus der EP-A-1 068 918 ist eine Vorrichtung dieser Art bekannt, bei der ein hohlzylindrisch ausgebildeter Werkstückträger auf das ebenfalls hohlzylindrisch ausgebildete Spannfutter aufgesetzt und mittels einer Spannvorrichtung am Spannfutter festgespannt wird. Die Spannvorrichtung umfasst eine Mehrzahl von um den Umfang des Spannfutters verteilt angeordneten Spannelementen in Form von Spannkugeln, die mit einem in einem Ringraum des Spannfutters angeordneten, federbelasteten Ringkolben wirkverbunden sind. Beim hydraulisch oder pneumatisch entgegen der Federkraft beaufschlagten Ringkolben werden die Spannkugeln in entsprechenden Nuten des Spannfutters gehalten, so dass sie nicht über seine Oberfläche vorstehen. Wird der Druck auf den Ringkolben abgebaut, so werden die Spannkugeln vom Ringkolben unter Einwirkung der Federkraft in eine umlaufende Ringnut des Werkstückträgers hineingepresst und dadurch der Werkstückträger am Spannfutter festgespannt. Die Spannkräfte werden über die punktuell aufliegenden Spannkugeln übertragen und sind dadurch in ihrer Grösse limitiert. Beim Auftreten von höheren Zugkräften versagen derartige Vorrichtungen aufgrund der Überschreitung der Hertzschen Pressung.

In der Druckschrift GB-A-593,864 ist ein Spannfutter beschrieben, welches einen ein Werkzeug aufnehmender konischer Aufnahmekörper und eine diesen umfassende, in der Höhe verstellbare Spannhülse aufweist. Eine Adapterhülse mit dem eingespannten Werkzeug ist in den Aufnahmekörper einsteckbar und wird mittels in diesem gelagerten Rollen gesichert. Diese Rollen sind derart angeordnet, dass sie mit ihrer Mittelachse annähernd parallel zu diesen konischen Bohrung im Aufnahmekörper verlaufen und in entsprechenden Nuten an der Aussenfläche der Adapterhülse einrastbar sind. Diese Rollen dienen aber nicht zum eigentlichen Verspannen, sondern sie sind bloss für ein Sichern vorgesehen.

Der vorliegenden Erfindung liegt die Aufgabe zugrunde, eine Vorrichtung der eingangs genannten Art zu schaffen, die auch höheren Zugkräften besser standhält.

Diese Aufgabe wird erfindungsgemäss durch eine Vorrichtung mit den Merkmalen des Anspruches 1 gelöst.

Weitere bevorzugte Ausgestaltungen der erfindungsgemässen Vorrichtung bilden den Gegenstand der abhängigen Ansprüche.

Mit der erfindungsgemässen Vorrichtung, bei der die Spannelemente als Rollen mit zum Spannfutter-Umfang tangential gerichteten Achsen ausgebildet sind, die zumindest über einen Teil ihrer Länge eine gewölbte Aussenform aufweisen, wobei der Radius der Wölbung dem Radius der Werkstückträger-Umfangsfläche entspricht, derart, dass die Rollen in der Spannstellung in einer Linienberührung mit der Werkstückträger-Umfangsfläche stehen, kann die Flächenpressung bei der Erzeugung der den Werkstückträger festhaltenden Spannkräfte erheblich reduziert und das Spannfutter auch im Bereich höherer Zugkräfte eingesetzt werden.

Die Erfindung wird nachfolgend anhand der Zeichnung näher erläutert. Es zeigen:
- Fig. 1: im Längsschnitt ein erstes Ausführungsbeispiel einer erfindungsgemässen Vorrichtung zum Festspannen eines Werkstückträgers an einem an einer Bearbeitungsmaschine fixierbaren Spannfutter, mit sich in einer Freigabestellung befindenden Spannelementen;
- Fig. 2: im Längsschnitt die Vorrichtung nach Fig. 1, mit sich in einer Spannstellung befindenden Spannelementen;
- Fig. 3: in Seitenansicht ein Ausführungsbeispiel eines erfindungsgemässen Spannelementes für die Vorrichtung nach Fig. 1 und 2;
- Fig. 4: schematisch ein Spannelement in der Spannstellung zwischen einem Spanndorn und einer inneren Umfangsfläche des Werkstückträgers;
- Fig. 5: im Längsschnitt ein zweites Ausführungsbeispiel einer erfindungsgemässen Vorrichtung zum Festspannen eines Werkstückträgers an einem an einer Bearbeitungsmaschine fixierbaren Spannfutter, mit sich in einer Freigabestellung befindenden Spannelementen;
- Fig. 6: im Längsschnitt die Vorrichtung nach Fig. 5, mit sich in einer Spannstellung befindenden Spannelementen;
- Fig. 7: in Seitenansicht ein weiteres Ausführungsbeispiel eines erfindungsgemässen Spannelementes für die Vorrichtung nach Fig. 5 und 6; und
- Fig. 8: schematisch Aufteilung der auf das Spannelement nach Fig. 7 einwirkenden Kräfte.

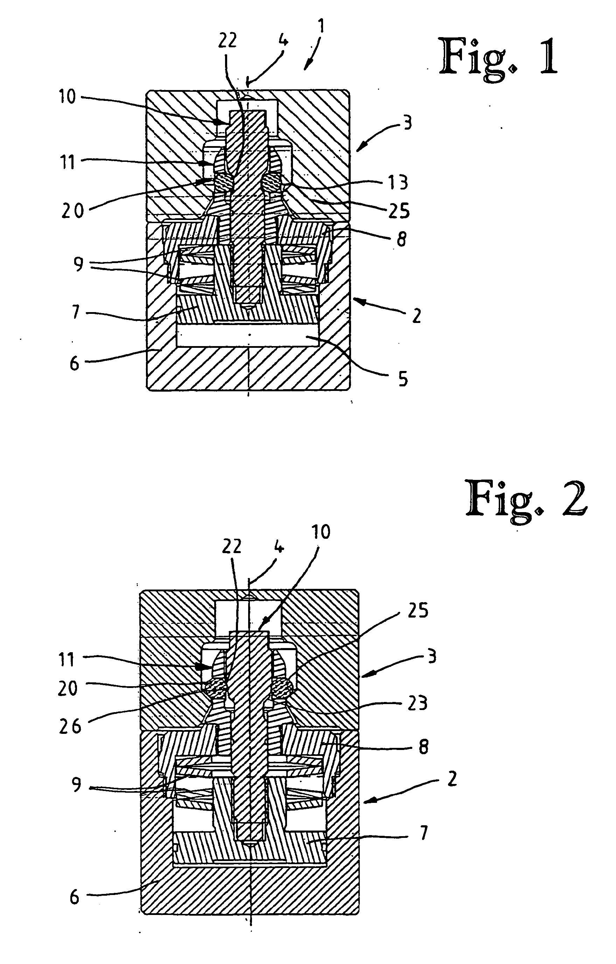

In Fig. 1 und Fig. 2 ist eine Vorrichtung 1 zum Festspannen eines Werkstückträgers 3 an einem an einer Bearbeitungsmaschine fixierbaren Spannfutter 2 dargestellt. Der Werkstückträger 3 dient zur Aufnahme eines an der Bearbeitungsmaschine zu bearbeitenden Werkstückes.

Das Spannfutter 2 umfasst eine zur Spannfutterachse 4 koaxiale Kolben/Zylindereinheit, die aus einem Zylinderteil 6 und einem in diesem angeordneten Kolben 7 besteht. In den Zylinderteil 6 ist von oben ein scheibenförmiger Spannfutterteil 8 eingesetzt. Zwischen dem scheibenförmigen Spannfutterteil 8 und dem Kolben 7 ist eine Feder bzw. ein gegebenenfalls aus zwei Tellerfedern bestehendes Federpaket 9 angeordnet, welches das Bestreben hat, den Kolben 7 nach unten zu drücken. Der Kolben 7 kann pneumatisch oder hydraulisch entgegen der Federkraft beaufschlagt und somit in seiner oberen Stellung nach Fig. 1 gehalten werden, solange eine vom Zylinderteil 6 umschlossene Kammer 5 unterhalb des Kolbens 7 unter Druck steht.

Der Kolben 7 ist mit einem zentralen Spanndorn 10 verbunden, beispielsweise verschraubt, der bei der axialen Kolbenverstellung in einem weiteren, ortsfesten Spannfutterteil 11 geführt ist. Der den Spanndorn 10 führende Spannfutterteil 11 ist mit dem bereits erwähnten scheibenförmigen Spannfutterteil 8 fest verbunden.

Im ortsfesten Spannfutterteil 11 ist eine Anzahl von radialen Nuten 13 angefertigt, die über den Umfang des Spannfutters 2 bzw. des Spannfutterteiles 11 verteilt sind. Herstellungstechnisch ist es von Vorteil, wenn jeweils zwei Nuten 13 radial gegenüberliegend angeordnet sind. Die Nuten 13 sind zur Aufnahme von je einer weiter unten noch näher beschriebenen Rolle 20 vorgesehen und so ausgebildet, dass in einer in Fig. 1 dargestellten Freigabestellung die Rollen 20 innerhalb der Nuten 13 gehalten werden und der Werkstückträger 3 ungehindert auf das Spannfutter 2 aufgesetzt. In der Freigabestellung sind die Rollen 20 in einer Umfangsnut 22 des Spanndornes 10 abgestützt, wobei der mit dem Kolben 7 verbundene Spanndorn 10 dank dem in der Kammer 5 herrschenden Druck in seiner obersten Stellung gehalten wird.

Zum Festspannen des Werkstückträgers 3 am Spannfutter 2 wird der Druck in der Kammer 5 abgebaut und der Kolben 7 mit dem Spanndorn 10 vom Federpaket 9 nach unten gedrückt. Dabei werden die Rollen 20 über eine konische Aussenfläche 23 des Spanndorns 10 radial auseinander gedrückt und mit ihrem aus der jeweiligen Nut 13 hinausragenden Teil an eine konische, sich nach unten verjüngende innere Umfangsfläche 25 des Werkstückträgers 3 gepresst.

In der in Fig. 2 dargestellten Spannstellung liegen die in Nuten 13 geführten Rollen 20 einerseits an der vorstehend erwähnten inneren Umfangsfläche 25 des Werkstückträgers 3 und anderseits an einer äusseren Spannkonusfläche 26 des Spanndornes 10 an. Die Geometrie der konischen Werkstückträger-Umfangsfläche 25 einerseits und der Spannkonusfläche 24 anderseits wird auf möglichst hohe Spannkräfte optimiert. Der Spannkonuswinkel beträgt vorzugsweise 6° bis 15°, die konische Werkstückträger-Umfangsfläche 25 schliesst vorzugsweise einen Winkel von 45° bis 75° mit der Werkstückträger- bzw. Spannfutterachse 4 ein.

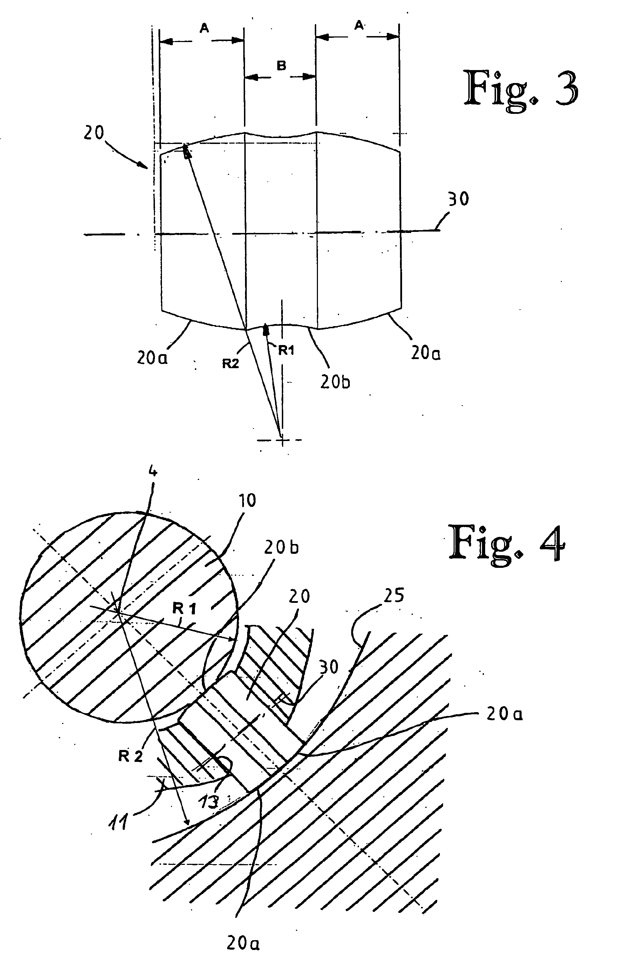

Die erfindungsgemässen, aus der Freigabestellung in die Spannstellung und umgekehrt radial verstellbaren Rollen 20 sind mit ihren Achsen 30 tangential zum Spannfutterumfang gerichtet und weisen gemäss Fig. 3 und Fig. 4 zumindest über einen Teil ihrer Länge eine nach aussen gewölbte Aussenform auf, wobei der Radius R2 der Wölbung dem Radius der Werkstückträger-Umfangsfläche 25 entspricht, derart, dass die Rollen 20 in der Spannstellung in einer Linienberührung mit der Werkstückträger-Umfangsfläche 25 stehen.

Eine besonders vorteilhafte Ausgestaltung einer Rolle 20 ist in Fig. 3 gezeigt. Die Rolle 20 weist zwei nach aussen gewölbte (konvexe) Teile 20a mit einem Radius R2 auf, zwischen denen ein nach innen gewölbter (konkaver) Teil 20b mit einem Radius R1 vorhanden ist. Die konvexen Teile 20a erstrecken sich jeweils über eine Länge A der Rolle 20, der konkave Teil 20b über eine Länge B. Die Rollen 20 stehen in der Spannstellung über die konvexen Teile 20a mit der inneren Umfangsfläche 25 des Werkstückträgers und über den konkaven Teil 20b mit der äusseren Spannkonusfläche 24 des Spanndornes 10 in einer Linienberührung. Die Längen A und B sind nicht gleich. Die Linienlänge 2A und die Linienlänge B werden mit Vorteil so ausgewählt, dass in der Spannstellung annähernd gleiche Pressung am Werkstückträger 3 und am Spanndorn 10 entsteht, was wiederum mit der bereits erwähnten Geometrie der konischen Werkstückträger-Umfangsfläche 25 einerseits und der Spannkonusfläche 24 des Spanndornes 10 anderseits zusammenhängt.

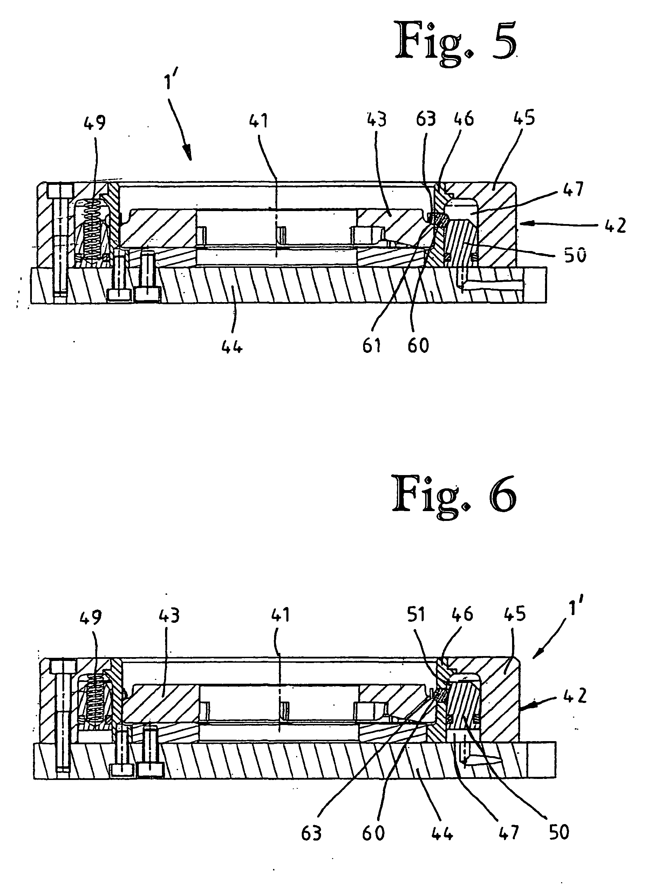

Eine andere Variante einer Vorrichtung 1' zum Festspannen eines Werkstückträgers 43 an einem Spannfutter 42 ist in Fig. 5 und 6 dargestellt. Das Spannfutter 42 umfasst einen Grundteil 44, einen ringförmigen Aussenteil 45 sowie einen ringförmigen Innenteil 46, die zusammen eine zur Spannfutterachse 41 koaxiale Ringkammer 47 umschliessen, in welcher ein Ringkolben 50 axial verstellbar angeordnet ist. Der pneumatisch oder hydraulisch betätigbarer Ringkolben 50 ist von einer Anzahl von über seinen Umfang verteilten Federn 49 in axialer Richtung belastet, die das Bestreben haben, ihn nach unten zu drücken. Der Ringkolben 50 weist eine konische Innenfläche 51 auf, über die bei der axialen Kolbenverstellung eine radiale Verstellung von Rollen 50 bewerkstelligt wird.

Es sind wiederum eine Anzahl von über den Umfang des Spannfutters 42 verteilten Rollen 60 vorgesehen, die in radialen Nuten 61 des ringförmigen Innenteils 46 angeordnet sind. Es ist auch bei dieser Ausführung herstellungstechnisch vorteilhaft, wenn jeweils zwei Nuten 61 radial gegenüberliegend angeordnet sind, obwohl dies mit der Darstellung nach Fig. 5 und 6 nicht übereinstimmt, da man in der linken Hälfte der beiden Figuren die Federn 49 zeigen wollte.

In Fig. 5 ist eine Freigabestellung dargestellt, bei der sich die Rollen 60 innerhalb der Nuten 61 befinden und der Werkstückträger 43 ungehindert in das Spannfutter 42 eingelegt und diesem gegenüber positioniert werden kann. Im Gegensatz zu der Variante nach Fig. 1 wird der Ringkolben 50 in der Freigabestellung von den Federn 49 in seiner untersten Position gehalten und in der Ringkammer 47 herrscht kein Druck. Bei Kolbenbeaufschlagung wird der Ringkolben 50 nach oben bewegt und die Rollen 50 über die konische Innenfläche 51 radial nach innen gedrückt und mit ihrem aus der jeweiligen Nut 61 hinausragenden Teil an eine konische, sich nach unten erweiternde äussere Umfangsfläche 63 des in das Spannfutter 42 eingesetzten Werkstückträgers 43 gepresst.

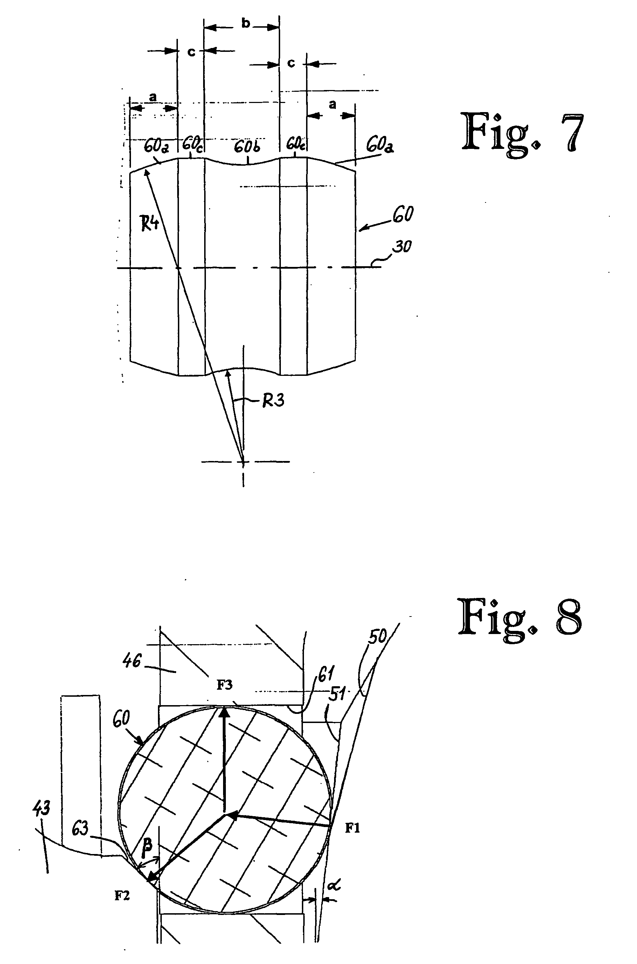

Die Spannstellung ist in Fig. 6 gezeigt. Dabei weist die jeweilige Rolle 60 erfindungsgemäss einen nach innen gewölbten (konkaven) Teil 60b (Fig.7) auf, über den sie mit der äusseren Werkstückträger-Umfangsfläche 63 in einer Linienberührung steht.

Eine besonders vorteilhafte Ausgestaltung einer Rolle 60 ist in Fig. 7 dargestellt. Die Rolle 60 ist mit je einem an den konkaven Teil 60b (mit einem Radius R3) beidseitig anschliessenden kreiszylindrischen Teil 60c versehen und in der jeweiligen radialen Nut 61 geführt. An jeden kreiszylindrischen Teil 60c schliesst sich ein nach aussen gewölbter (konvexer) Teil 60a an, wobei die Rollen 60 jeweils über die beiden konvexen Teile 60a mit der Umfangsfläche 63 in einer Linienberührung stehen. Der mittlere, konkave Teil 60b erstreckt sich über eine Länge b der Rolle 60, die konvexen Teile 60a jeweils über eine Länge a und die kreiszylindrischen Teile 60c jeweils über eine Länge c.

In Fig. 8 ist die Zuordnung der Kräfte F1, F2 und F3 angedeutet, wie sie über die einzelnen Rollenteile 60a, 60b, 60c übertragen werden. Dabei entsteht die Kraft F1 zwischen den konkaven Teilen 60b der Rolle 60 und der konischen Innenfläche 51 des Ringkolbens 50, die Kraft F2 zwischen dem konkaven Teil 60a und der äusseren Umfangsfläche 63 des Werkstückträgers 43 und die Kraft F3 zwischen den kreiszylindrischen Teilen 60c und der Nut 61 des ringförmigen Spannfutter-Innenteils 46. Die Grösse der Kraftkomponenten hängt mit der Geometrie der konischen Werkstückträger-Umfangsfläche 63 einerseits und der Spannkonusfläche (konische Innenfläche 51) des Ringkolbens 50 anderseits zusammen, die auf möglichst hohe Spannkräfte optimiert wird. Dabei beträgt der Spannkonuswinkel α vorzugsweise 6° bis 15°, die konische Werkstückträger-Umfangsfläche 63 steht vorzugsweise unter einem Winkel β von 45° bis 75° zur Vertikalen bzw. zur Werkstückträgerachse.

Die Grösse der Linienlängen a, b, c (Fig. 7) wird wiederum mit Vorteil so gewählt, dass an den einzelnen Berührungsstellen annähernd gleiche Oberflächenpressung entsteht.

Mit der erfindungsgemässen Vorrichtung, bei der die Spannelemente als Rollen mit zum Spannfutter-Umfang tangential gerichteten Achsen ausgebildet sind, die zumindest über einen Teil ihrer Länge eine gewölbte Aussenform aufweisen, wobei der Radius der Wölbung dem Radius der Werkstückträger-Umfangsfläche entspricht, derart, dass die Rollen in der Spannstellung in einer Linienberührung mit der Werkstückträger-Umfangsfläche stehen, kann die Flächenpressung bei der Erzeugung der den Werkstückträger festhaltenden Spannkräfte erheblich reduziert werden und das Spannfutter auch im Bereich höherer Zugkräfte eingesetzt werden.

Diese Vorrichtung kann im Rahmen der Erfindung auch bei Pressen beispielsweise zum Pressen von Kunststoff- oder Sintermetallteilen verwendet werden, bei welchen unter einem Werkstückträger auch eine Art Werkzeugträger von Stempeln oder dergleichen verstanden werden kann.

Bei den Rollen können auch zylindrische Rollen oder solche, bei denen bspw. gemäss Fig. 3 der Radius R1 beim Teil 20b der Rolle 20 weggelassen ist und die Rolle somit teils zylindrisch und teils gewölbt ausgebildet ist.

## Patentansprüche

1. Vorrichtung zum Festspannen eines Werkstückträgers (3; 43) an einem an einer Bearbeitungsmaschine fixierbaren Spannfutter (2; 42), mit einer Anzahl von über den Umfang des Spannfutters (2; 42) verteilten Spannelementen, die radial zur Spannfutterachse (4; 41) aus einer Freigabestellung in eine Spannstellung verstellbar und in der Spannstellung an eine Umfangsfläche (25; 63) des gegenüber dem Spannfutter (2; 42) positionierten Werkstückträgers (3; 43) anpressbar sind, zur Erzeugung der den Werkstückträger (3; 43) am Spannfutter (2; 42) festhaltenden Spannkraft, dadurch gekenzeichnet, dass die Spannelemente als Rollen (20; 60) mit zum Spannfutter-Umfang annähernd tangential gerichteten Achsen (30) ausgebildet sind, derart, dass sich in der Spannstellung eine bestimmbare Oberflächenpressung bei der gegenseitigen Berührung dieser Rollen (20; 60) mit dem Werkstückträger (3; 43), einem Spanndorn (10) bzw. einem Ringkolben (50) des Spannfutters (2; 42) und dem Spanfutterteil (11, 46) ergibt, und die Rollen (20; 60) zumindest über einen Teil ihrer Länge eine gewölbte Aussenform aufweisen, wobei der Radius (R2; R3) der Wölbung dem Radius der Werkstückträger-Umfangsfläche (25; 63) entspricht, derart, dass die Rollen (20; 60) in der Spannstellung in einer Linienberührung mit der Werkstückträger-Umfangsfläche (25; 63) stehen.

2. Vorrichtung nach Anspruch 1, **dadurch gekennzeichnet, dass** zur radialen Verstellung der Rollen (20; 60) im Spannfutter (2; 42) ein federbelasteter und pneumatisch oder hydraulisch betätigbarer Kolben (7; 50) vorgesehen ist.

3. Vorrichtung nach Anspruch 2, **dadurch gekennzeichnet, dass** der koaxial zur Spannfutterachse (4) angeordnete Kolben (7) mit einem zentralen Spanndorn (10) verbunden ist, der eine konische Aussenfläche (23, 24) zur radialen Verstellung der Rollen (20) aufweist, wobei die Rollen (20) in der Spannstellung über mindestens einen nach aussen gewölbten (konvexen) Teil (20a) in einer Linienberührung mit einer inneren Umfangsfläche (25) des Werkstückträgers (3) stehen.

4. Vorrichtung nach Anspruch 3, **dadurch gekennzeichnet, dass** die Rollen (20) in radialen Nuten (13) eines ortsfesten Spanfutterteiles (11) geführt sind und in der Spannstellung einerseits mit ihrem aus den Nuten (13) hinausragenden Teil mit der konisch ausgebildeten inneren Umfangsfläche (25) des auf das Spannfutter (2) aufgesetzten Werkstückträgers (3) und anderseits mit einer äusseren Spannkonusfläche (24) in einer Linienberührung stehen, wobei der Spannkonuswinkel vorzugsweise 6° bis 15° beträgt und die konische Werkstückträger-Umfangsfläche (25) einen Winkel von vorzugsweise 45° bis 75° mit der Werkstückträger- bzw. Spannfutterachse (4) einschliesst.

5. Vorrichtung nach Anspruch 4, **dadurch gekennzeichnet, dass** die Rollen (20) jeweils zwei nach aussen gewölbte (konvexe) Teile (20a) aufweisen, zwischen denen ein nach innen gewölbter (konkaver) Teil (20b) vorhanden ist, wobei die Rollen (20) in der Spannstellung über die konvexen Teile (20a) mit der inneren Umfangsfläche (25) des Werkstückträgers (3) und über den konkaven Teil (20b) mit der äusseren Spannkonusfläche (24) des Spanndornes (10) in einer Linienberührung stehen.

6. Vorrichtung nach Anspruch 5, **dadurch gekennzeichnet, dass** die Länge (B) des konkaven Teiles (20b) der jeweiligen Rolle (20) und die Länge (2A) ihrer beiden konvexen Teile (20a) so gewählt sind, dass in der Spannstellung bei der Linienberührung Rolle/Werkstückträger und Rolle/Spanndorn annähernd gleiche Oberflächenpressung vorhanden ist.

7. Vorrichtung nach Anspruch 2, **dadurch gekennzeichnet, dass** der Kolben als ein Ringkolben (50) ausgebildet und in einer Ringkammer (47) des Spannfutters (42) angeordnet ist, wobei die Rollen (60) über eine konische Innenfläche (51) des Ringkolbens (50) radial verstellbar sind und in der Spannstellung über einen nach innen gewölbten (konkaven) Teil (60b) mit einer äusseren Umfangsfläche (63) des Werkstückträgers (43) in einer Linienberührung stehen.

8. Vorrichtung nach Anspruch 7, **dadurch gekennzeichnet, dass** die Rollen (60) in radialen Nuten (61) eines ortsfesten Spanfutterteiles (46) geführt sind und in der Spannstellung einerseits mit ihrem aus den Nuten (13) hinausragenden Teil mit der konisch ausgebildeten äusseren Umfangsfläche (63) des in das Spannfutter (42) eingesetzten Werkstückträgers (43) und anderseits mit der konischen Innenfläche (51) des Ringkolbens (50) in einer Linienberührung stehen, wobei der Spannkonuswinkel (α) des Ringkolbens (50) vorzugsweise 6° bis 15° beträgt und die konische Werkstückträger-Umfangsfläche (63) einen Winkel (β) von vorzugsweise 45° bis 75° mit der Werkstückträger- bzw. Spannfutterachse (41) einschliesst.

9. Vorrichtung nach Anspruch 8, **dadurch gekennzeichnet, dass** die Rollen (60) jeweils mit je einem an den konkaven Teil (60b) beidseitig anschliessenden kreiszylindrischen Teil (60c) in der jeweiligen radialen Nut (61) geführt sind, wobei sich an jeden kreiszylindrischen Teil (60c) ein nach aussen gewölbter (konvexer) Teil (60a) anschliesst, wobei die Rollen (60) jeweils über die beiden konvexen Teile (60a) mit der konischen Innenfläche (51) des Ringkolbens (50) in einer Linienberührung stehen.

10. Vorrichtung nach Anspruch 9, **dadurch gekennzeichnet, dass** die Länge (b) des konkaven Teiles (60b) der jeweiligen Rolle (60), die Länge (2c) ihrer beiden kreiszylindrischen Teile (60c) und die Länge (2a) ihrer beiden konvexen Teile (60a) so gewählt sind, dass in der Spannstellung bei der Linienberührung Rolle/Werkstückträger, Rolle/Nut und Rolle/Ringkolben annähernd gleiche Pressung vorhanden ist.

## Claims

1. Device for clamping a workpiece holder (3; 43) to a collet chuck (2; 42) that can be fixed to a machine tool, comprising a plurality of clamping elements distributed around the circumference of the collet chuck (2; 42) that can be adjusted radially to the axis (4; 41) of the collet chuck from a release to a clamping position, and can be pressed against a circumferential surface (25; 63) of the workpiece holder (3; 43) positioned relative to the collet chuck (2; 42) in the clamping position in order to generate the clamping force securing the workpiece holder (3; 43) to the collet chuck (2;42), **characterised in that** the clamping elements are designed as rollers (20; 60) having axes (30) aligned more or less tangentially to the collet chuck circumference such that in the clamping position a determinable surface pressure is produced by the mutual contact of these rollers (20; 60) with the workpiece holder (3; 43), a clamping mandrel (10) and an annular piston (50) of the collet chuck (2; 42) and the collet chuck part (11, 46), and the rollers (20; 60) have a curved outer form at least over part of their length, the radius (R2; R3) of the curve corresponding to the radius of the workpiece holder circumferential surface (25; 63) such that in the clamping position the rollers (20; 60) are in line contact with the workpiece holder circumferential surface (25; 63).

2. Device according to Claim 1, **characterised in that** a spring-loaded and pneumatically or hydraulically operable piston (7; 50) is provided in the collet chuck (2; 42) for radial adjustment of the rollers (20; 60).

3. Device according to Claim 2, **characterised in that** the piston (7) arranged coaxially to the collet chuck axis (4) is connected to a central clamping mandrel (10) that has a conical outer surface (23, 24) for radially adjusting the rollers (20), in the clamping position the rollers (20) being in line contact with an inner circumferential surface (25) of the workpiece holder (3) over at least an outwardly curved (convex) part (20a).

4. Device according to Claim 3, **characterised in that** the rollers (20) are guided in radial grooves (13) of a fixed collet chuck part (11) and in the clamping position on the one hand with their part projecting out of the grooves (13) being in line contact with the conically designed inner circumferential surface (25) of the workpiece holder (3) placed on the collet chuck (2), and on the other hand with an outer clamping cone surface (24), the clamping cone angle preferably being 6° to 15°, and the conical workpiece holder circumferential surface (25) enclosing an angle of preferably 45° to 75° with the workpiece holder or collet chuck axis (4).

5. Device according to Claim 4, **characterised in that** the rollers (20) respectively have two outwardly curved (convex) parts (20a) between which there is an inwardly curved (concave) part (20b), whereas in the clamping position the rollers (20) being in line contact with the inner circumferential surface (25) of the workpiece holder (3) over the convex parts (20a) and with the outer clamping cone surface (24) of the clamping mandrel (10) over the concave part (20b).

6. Device according to Claim 5, **characterised in that** the length (B) of the concave part (20b) of the respective roller (20) and the length (2A) of its two convex parts (20a) are chosen such that in the clamping position with the roller/workpiece holder and roller/clamping mandrel line contact there is more or less equal surface pressure.

7. Device according to Claim 2, **characterised in that** the piston is designed as an annular piston (50) and is disposed in an annular chamber (47) of the collet chuck (42), the rollers (60) being radially adjustable over a conical inner surface (51) of the annular piston (50) and in the clamping position are in line contact with an outer circumferential surface (63) of the workpiece holder (43) over an inwardly curved (concave) part (60b).

8. Device according to Claim 7, **characterised in that** the rollers (60) are guided in radial grooves (61) of a fixed collet chuck part (46) and in the clamping position, with their part projecting out of the grooves (13), are on the one hand in line contact with the conically designed outer circumferential surface (63) of the workpiece holder (43) inserted into the collet chuck (42), and on the other hand with the conical inner surface (51) of the annular piston (50), the clamping cone angle (α) of the annular piston (50) being preferably 6° to 15°, and the conical workpiece holder circumferential surface (63) enclosing an angle (β) of preferably 45° to 75° with the workpiece holder or collet chuck axis (41).

9. Device according to Claim 8, **characterised in that** the rollers (60) are respectively guided in the respective radial groove (61) with a respective circular cylindrical part (60c) adjoining the concave part (60b) on both sides, an outwardly curved (convex) part (60a) adjoining each circular cylindrical part (60c), the rollers (60) respectively being in line contact with the conical inner surface (51) of the annular piston (50) over the two convex parts (60a).

10. Device according to Claim 9, **characterised in that** the length (b) of the concave part (60b) of the respective roller (60), the length (2c) of their two circular cylindrical parts (60c), and the length (2a) of their two convex parts (60a) are chosen such that in the clamping position there is more or less equal pressure with the roller/workpiece holder, roller/groove and roller/annular piston line contact.

## Revendications

1. Dispositif de serrage d'un porte-outil (3; 43) sur un mandrin (2; 42) pouvant être immobilisé sur une machine d'usinage, comprenant un certain nombre d'éléments de serrage, qui sont répartis sur le pourtour du mandrin (2; 42) de serrage, qui peuvent passer radialement à l'axe (4; 41) du mandrin de serrage d'une position de desserrage à une position de serrage et qui, dans la position de serrage, peuvent être pressés sur une surface (25; 63) périphérique du porte-outil (3; 43) mis en position par rapport au mandrin (2; 42) de serrage pour la production de la force de serrage maintenant le porte-outil (3; 43) sur le mandrin (2; 42) de serrage, **caractérisé en ce que** les éléments de serrage sont constitués sous la forme de galets (20; 60) ayant des axes (30) dirigés à peu près tangentiellement au pourtour du mandrin de serrage, de manière à obtenir, dans la position de serrage, une application d'une pression par une surface pouvant être déterminée lors du contact mutuel de ces galets (20; 60) avec le porte-outil (3; 43), avec une broche (10) de serrage ou avec un piston (50) annulaire du mandrin (2; 42) de serrage et la partie (11; 46) du mandrin de serrage, et les galets (20; 30) ont une forme extérieure bombée, le rayon (R2; R3) du bombement correspondant au rayon de la surface (25; 63) périphérique du porte-outil, de manière à ce que les galets (20; 60) soient, dans la position de serrage, en un contact linéaire avec la surface (25; 63) périphérique du porte-outil.

2. Dispositif suivant la revendication 1, **caractérisé en ce que**, pour le réglage radial des galets (20; 60), il est prévu, dans le mandrin (2; 42) de serrage, un piston (7; 50) soumis à l'action d'un ressort et pouvant être actionné pneumatiquement ou hydrauliquement.

3. Dispositif suivant la revendication 2, **caractérisé en ce que** le piston (7) monté coaxialement à l'axe (4) du mandrin de serrage est relié à une broche (10) centrale de serrage, qui a une surface (23; 24) conique pour le réglage radial des galets (20), les galets (20) étant, dans la position de serrage, en un contact linéaire avec une surface (25) périphérique intérieure du porte-outil (3) par au moins une partie (20a) bombée vers l'extérieur (convexe).

4. Dispositif suivant la revendication 3, **caractérisé en ce que** les galets (20) sont guidés dans des rainures (13) radiales d'une partie (11) fixe du mandrin de serrage et sont, dans la position de serrage, en un contact linéaire, d'une part, par leurs parties dépassant des rainures (13) avec la surface (25) périphérique intérieure constituée de manière conique du porte-outil (3) mis sur le mandrin (2) de serrage et, d'autre part, avec une surface (24) extérieure de cône de serrage, l'angle du cône de serrage allant, de préférence, de 6° à 15° et la surface (25) périphérique conique du porte-outil faisant un angle, de préférence, de 45° à 75° avec l'axe (4) du porte-outil ou du mandrin de serrage.

5. Dispositif suivant la revendication 4, **caractérisé en ce que** les galets (20) ont respectivement deux parties (20a) bombées vers l'extérieur (convexes), entre lesquelles il y a une partie (20b) bombée vers l'intérieur (concave), les galets (20) étant, dans la position de serrage, en un contact linéaire, par les parties (20a) convexes avec la surface (25) périphérique intérieure du porte-outil (3), et, par la partie (20b) concave, avec la surface (24) extérieure de cône de serrage de la broche (10) de serrage.

6. Dispositif suivant la revendication 5, **caractérisé en ce que** la longueur (B) de la partie (20b) concave du galet (20) respectif et la longueur (2A) de cette partie (20b) convexe sont choisies de manière à avoir, dans la position de serrage, lors du contact linéaire galet/porte-outil et galet/broche de serrage, à peu près la même application d'une pression par une surface.

7. Dispositif suivant la revendication 2, **caractérisé en ce que** le piston est constitué sous la forme d'un piston (50) annulaire et est monté dans une chambre (47) annulaire du mandrin (42) de serrage, les galets (60) étant réglables radialement, par une surface (51) intérieure conique du piston (50) annulaire, et étant, dans la position de serrage, par une partie (60b) bombée vers l'intérieur (concave), en un contact linéaire avec une surface (63) périphérique extérieure du porte-outil (43).

8. Procédé suivant la revendication 7, **caractérisé en ce que** les galets (60) sont guidés dans des rainures (61) radiales d'une partie (46) fixe du mandrin de serrage et sont, dans la position de serrage, en un contact linéaire, d'une part, par leurs parties dépassant des rainures (13) avec la surface (63) périphérique extérieure constituée coniquement du porte-outil (43) inséré dans le mandrin (42) de serrage et, d'autre part, avec la surface (51) intérieure conique du piston (50) annulaire, l'angle (α) du cône de serrage du piston (50) annulaire étant, de préférence, de 6° à 15° et la surface (63) périphérique conique du porte-outil faisant un angle (β), de préférence, de 45° à 75° avec l'axe (41) du porte-outil ou du mandrin de serrage.

9. Dispositif suivant la revendication 8, **caractérisé en ce que** les galets sont guidés respectivement dans la rainure (61) radiale respective par respectivement une partie (60c) cylindrique de section circulaire se raccordant des deux côtés à la partie (60b) concave, une partie (60a) bombée vers l'extérieur (convexe) se raccordant à chaque partie (60c) cylindrique de section circulaire, les galets (60) étant respectivement, par les deux parties (60a) convexes, en un contact linéaire avec la surface (51) intérieure conique du piston (50) annulaire.

10. Dispositif suivant la revendication 9, **caractérisé en ce que** la longueur (B) de la partie (60b) concave du galet (60) respectif, la longueur (2c) de ces deux parties (60c) cylindriques de section circulaire et la longueur (2a) de ces deux parties (60a) convexes sont choisies, de manière à avoir, dans la position de serrage, à peu près la même application d'une pression dans le contact linéaire galet/porte-outil, galet/rainure et galet/piston annulaire.
